# DEMANDE DE BREVET EUROPEEN

(11) **EP 4 799 830 A1**
(43) Date de publication de la demande: **02.09.2026**
(21) Numéro de dépôt: 26161077.8
(22) Date de dépôt: 26.02.2026
(51) Int. Cl.: B60G 7/00, B60G 13/00

(54) **SYSTÈME DE SUSPENSION COMPORTANT UN CAPOT DE PROTECTION**

(30) Priorité: 27.02.2025 FR 2502002
(71) Demandeur: Flexis, 92100 Boulogne Billancourt (FR)
(72) Inventeur: ENJOLRAS, Gilles, 78640 VILLIERS SAINT-FREDERIC (FR); FAUQUEUX, Olivier, 78280 GUYANCOURT (FR); SARAHOUI, Aziz, 72000 LE MANS (FR)
(74) Mandataire: Lavoix

(57) **Abrégé**

La présente invention concerne un système de suspension (12) pour véhicule (10) comportant un bras de suspension arrière (18) et un amortisseur (16) qui est lié au bras de suspension arrière (18) par une articulation arrière (22) de manière que l'amortisseur (16) puisse pivoter autour d'un axe d'articulation (A1) selon un débattement angulaire déterminé entre deux positions angulaires extrêmes, l'articulation arrière (22) comportant une tige de fixation (28) sur laquelle l'amortisseur (16) est monté, caractérisé en ce qu'il comporte un capot de protection (36) qui est rapporté sur la tige de fixation (28) de manière à protéger l'articulation arrière (22) en cas de choc arrière.

## Description

La présente invention concerne un système de suspension pour un véhicule, en particulier pour un essieu arrière.

On connaît déjà des véhicules munis d'un système de suspension à bras tirés. Généralement, pour chaque roue du véhicule, le système de suspension comprend un bras de suspension et un amortisseur. L'amortisseur comporte une première extrémité qui est articulée sur le bras de suspension et une seconde extrémité qui est articulée sur la caisse ou le châssis du véhicule.

Pour l'articulation sur le bras de suspension, l'amortisseur comporte un œillet de fixation qui est monté sur un arbre transversal porté par le bras de suspension. A cet effet, le bras de suspension comporte par exemple deux parois radiales au travers desquelles l'arbre transversal est fixé et entre lesquelles l'œillet de fixation est agencé.

Dans le cas d'un bras de suspension situé à l'arrière du véhicule, pour une roue non directrice du véhicule, il est important que l'œillet de fixation, et l'extrémité associée de l'amortisseur, soient protégés contre des chocs. En effet, lorsque le véhicule effectue une marche arrière, il peut rencontrer un obstacle, tel qu'un bord de trottoir, qui peut être sensiblement à la même hauteur que l'œillet de fixation par rapport au sol. Ceci peut détériorer irrémédiablement le bras de suspension et/ou l'amortisseur.

De même, si la roue arrière descend dans un creux suffisamment profond, cela peut conduire à un contact entre l'œillet de fixation et le sol, provoquant ainsi des dégâts sur le bras de suspension et/ou sur l'amortisseur.

Dans le système de suspension décrit précédemment, l'œillet de fixation peut être en partie protégé par les bords des parois radiales servant à la fixation de l'arbre transversal. Toutefois, ce type d'agencement peut être coûteux et il utilise des éléments lourds pénalisant la masse embarquée par le véhicule.

Un but de l'invention est alors de proposer un système de suspension qui soit plus léger tout en étant plus résistant aux chocs.

A cet effet, l'invention a pour objet un système de suspension pour véhicule comportant un bras de suspension arrière et un amortisseur qui est lié au bras de suspension arrière par une articulation arrière de manière que l'amortisseur puisse pivoter autour d'un axe d'articulation selon un débattement angulaire déterminé entre deux positions angulaires extrêmes, l'articulation arrière comportant une tige de fixation sur laquelle l'amortisseur est monté, caractérisé en ce qu'il comporte un capot de protection qui est rapporté sur la tige de fixation de manière à protéger l'articulation arrière en cas de choc arrière, et en ce que le capot de protection comporte une paroi principale qui s'étend globalement dans un plan parallèle à l'axe d'articulation, la paroi principale étant pourvue d'une échancrure apte à recevoir une portion de l'amortisseur dans au moins une de ses positions angulaires extrêmes.

Le système de suspension selon l'invention est plus léger que les systèmes existants tout en assurant une protection efficace contre des chocs arrière, notamment contre des bords de trottoir ou des plots fixes. La solution selon l'invention permet aussi de protéger l'oeillet de fixation et l'amortisseur lorsque la roue du véhicule descend dans un creux, ou descend d'un bord de trottoir.

Suivant d'autres aspects avantageux de l'invention, le système de suspension comprend une ou plusieurs des caractéristiques suivantes, prises isolément ou suivant toutes les combinaisons techniquement possibles :
- le capot de protection comporte une bride de fixation qui est formée d'un élément de paroi radiale et qui comporte un trou de montage traversé par la tige de fixation ;
- l'élément de paroi radiale se prolonge vers l'arrière jusqu'à une extrémité arrière de la paroi principale ;
- la paroi principale comporte, à son extrémité arrière, du côté opposé à la bride de fixation, au moins une languette de protection qui s'étend sensiblement perpendiculairement, par rapport au plan général de la paroi principale ;
- la paroi principale comporte deux languettes de protection dont l'une s'étend dans un plan sensiblement orthogonal à l'élément de paroi radiale, et l'autre s'étend dans un plan sensiblement parallèle à l'élément de paroi radiale ;
- la paroi principale comporte, du côté opposé à la bride de fixation, un organe d'accrochage apte à retenir le capot de protection sur le bras de suspension arrière, avant la fixation de la tige de fixation sur le bras de suspension arrière ;
- l'organe d'accrochage comporte deux flancs radiaux, chaque flanc comportant au moins un crochet ;
- le capot de protection est réalisé d'une seule pièce, de préférence en tôle emboutie ou par moulage en matière plastique.

La présente invention propose aussi un véhicule comportant un système de suspension selon l'une quelconque des revendications précédentes.

L'invention apparaîtra plus clairement à la lecture de la description qui va suivre, donnée uniquement à titre d'exemple non limitatif, et faite en référence aux dessins dans lesquels :
- la figure 1 est une vue partielle de côté qui représente schématiquement un système de suspension de véhicule automobile équipé d'un capot de protection conforme aux enseignements de l'invention ;
- la figure 2 est une vue en coupe axiale selon le plan II-II qui représente schématiquement une partie du système de suspension de la figure 1 équipé du capot de protection ;
- la figure 3 est une vue en perspective de trois quart arrière qui représente le capot de protection de la figure 1 ;
- la figure 4 est une vue similaire à celle de la figure 3 qui représente une variante de réalisation du capot de protection comportant un organe d'accrochage.

Dans la suite de la description, des éléments identiques ou similaires seront dans certains cas désignés par les mêmes chiffres de référence.

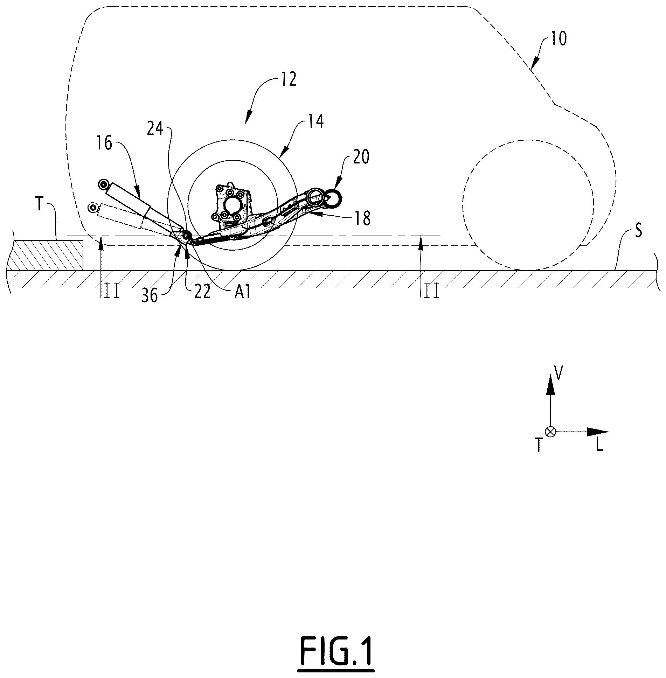

Sur la figure 1, on a représenté un véhicule automobile 10 pourvu d'un système de suspension 12 conforme aux enseignements de l'invention.

Dans la suite de la description, on utilisera à titre non limitatif une orientation selon un repère V, L, T, représenté sur les figures, correspondant à des directions verticale V, longitudinale L, et transversale T, la direction longitudinale L correspondant à l'orientation générale du véhicule 10. La direction longitudinale L est ici orientée de l'arrière vers l'avant, ce qui correspond à une orientation de la gauche vers la droite en considérant la figure 1.

A des fins illustratives, seule une roue arrière 14 du véhicule 10 est représentée en trait continu et seule une partie du système de suspension 12 agencée à l'arrière du véhicule 10 est représentée.

Cette partie du système de suspension 12 comporte un amortisseur 16 et un bras de suspension arrière 18 qui sont articulés sur la caisse ou sur le châssis (non représentés) du véhicule 10, la roue arrière 14 étant portée par le bras de suspension arrière 18.

Le bras de suspension arrière 18 comporte une articulation avant 20 qui relie le bras de suspension arrière 18 à la caisse ou au châssis du véhicule 10 et une articulation arrière 22 qui relie le bras de suspension arrière 18 à l'amortisseur 16.

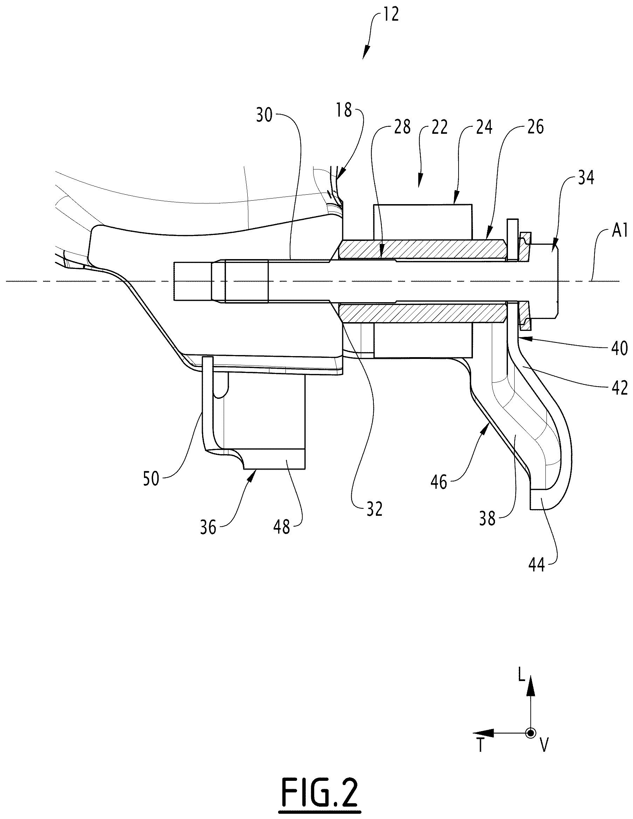

L'articulation arrière 22 est représentée de manière plus détaillée sur la figure 2. Elle fournit un axe d'articulation A1, ici d'orientation transversale.

L'amortisseur 16 est par exemple du type hydraulique. Il comporte ici un œillet de fixation 24, à son extrémité axiale inférieure, qui est articulé sur un palier lisse 26 porté par le bras de suspension arrière 18 de manière à former une liaison pivot glissant selon l'axe d'articulation A1.

Le palier lisse 26 est ici porté par une tige de fixation 28 transversale qui est vissée dans le bras de suspension arrière 18, le bras de suspension arrière 18 comportant un trou taraudé 30 à cet effet. Le palier lisse 26 est ainsi monté serré, selon une direction transversale, entre une surface radiale d'appui 32 du bras de suspension arrière 18 et une tête 34 de la tige de fixation 28.

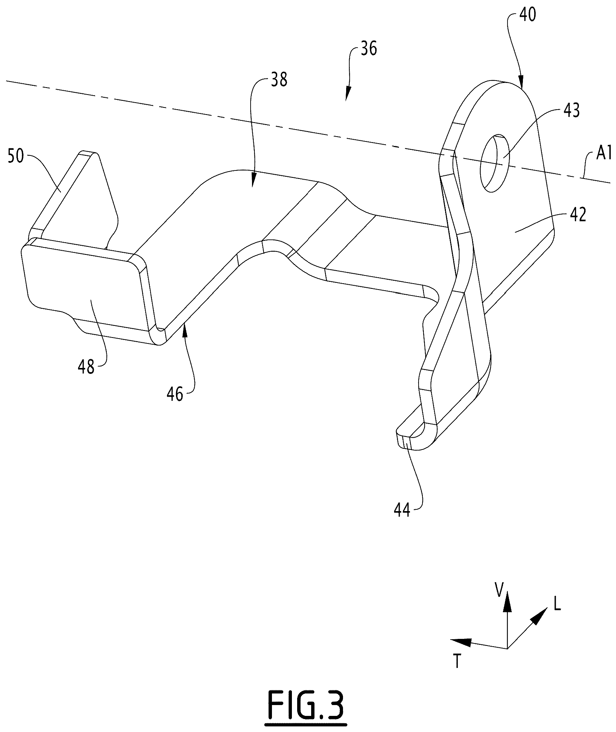

Avantageusement, le système de suspension 12 comporte un capot de protection 36 rapporté qui est monté fixe sur le bras de suspension arrière 18. Ce capot de protection 36 est visible de manière isolée sur la figure 3.

Le capot de protection 36 comporte une paroi principale 38, qui s'étend globalement dans un plan parallèle à la tige de fixation 28 et une bride de fixation 40 qui permet sa fixation sur le bras de suspension arrière 18 par l'intermédiaire de la tige de fixation 28.

Selon le mode de réalisation représenté, la bride de fixation 40 est formée d'un élément de paroi radiale 42 qui est muni d'un trou de montage 43 traversé par la tige de fixation 28. La bride de fixation 40 est ici montée serrée entre le palier lisse 26 et la tête 34 de la tige de fixation 28.

L'élément de paroi radiale 42 se prolonge vers l'arrière jusqu'à une extrémité arrière 44 de la paroi principale 38.

La paroi principale 38 est pourvue d'une échancrure 46, ou encoche, apte à recevoir une portion de l'amortisseur 16, ici une portion du corps principal de l'amortisseur 16, lorsque celui-ci occupe une position angulaire extrême de pivotement, qui est illustrée en trait pointillé sur la figure 1.

L'échancrure 46 a ici un profil trapézoïdal, en vue de dessus, avec un côté rectangle, du côté du trou taraudé 30, c'est-à-dire du côté gauche sur la figure 2, et un côté qui s'élargit vers l'arrière, du côté de la tête 34, c'est-à-dire du côté droit sur la figure 2.

Avantageusement, la paroi principale 38 comporte, à son extrémité arrière 44, du côté opposé à la bride de fixation 40, une languette de protection arrière 48 et une languette de protection latérale 50 qui sont sensiblement orthogonales au plan général de la paroi principale 38.

La languette de protection arrière 48 s'étend ici dans un plan sensiblement orthogonal à l'élément de paroi radiale 42 formant la bride de fixation 40.

La languette de protection latérale 50 s'étend ici dans un plan sensiblement parallèle à l'élément de paroi radiale 42.

Selon une variante de réalisation (non représentée), le capot de protection 36 pourrait être dépourvu de la languette de protection arrière 48 ou de la languette de protection latérale 50.

Avantageusement, le capot de protection 36 est réalisé d'une seule pièce en tôle, par exemple par pliage et emboutissage.

Selon une variante de réalisation, le capot de protection 36 peut être réalisé dans une matière plastique adaptée par moulage ou par impression 3D.

Le montage du capot de protection 36 sur le bras de suspension arrière 18 peut être réalisé très simplement.

On peut, par exemple, positionner le palier lisse 26 et l'œillet de fixation 24 contre le bras de suspension arrière 18, puis positionner le capot de protection 36 avec sa bride de fixation 40 en regard du trou taraudé 30. Il reste alors à insérer la tige de fixation 28 au travers du trou de montage 43 et du palier lisse 26 en la vissant dans le trou taraudé 30.

De préférence, une rondelle de serrage 51 est interposée entre la bride de fixation 40 et la tête 34 de la tige de fixation 28.

On décrit maintenant le fonctionnement du système de suspension 12 et du capot de protection 36 en considérant plus particulièrement la figure 1.

Lorsque le véhicule 10 recule, ici vers la gauche, l'articulation arrière 22 peut se trouver à la même hauteur qu'un obstacle, par rapport au sol S. L'obstacle est par exemple un bord de trottoir T tel que schématisé sur la figure 1.

Le capot de protection 36 vient alors en contact, par exemple par sa paroi principale 38, avec l'angle du trottoir T. Cela permet, non seulement de protéger l'articulation arrière 22 du système de suspension 12, mais également cela aide le système de suspension 12 à passer l'obstacle en glissant avec la paroi principale 38 sur l'angle du trottoir T.

On note que, dans l'état de repos du système de suspension 12, la paroi principale 38 est de préférence inclinée par rapport à la surface du sol S, d'un angle compris entre 5 et 45 degrés, de préférence entre 10 et 30 degrés. Ainsi, le capot de protection 36 remonte vers l'arrière du véhicule 10, ce qui forme une surface pentue apte à glisser sur l'obstacle lorsque le véhicule 10 recule.

Le capot de protection 36, en particulier son échancrure 46 et sa bride de fixation 40, son conformés de manière à protéger au maximum l'ensemble de l'articulation arrière 22, et de manière à ne pas empêcher le pivotement relatif du corps de l'amortisseur 16 par rapport au bras de suspension arrière 18.

Comme illustré sur la figure 1, l'amortisseur 16 peut occuper une position angulaire extrême, pivoté dans le sens antihoraire par rapport à la position de repos. Cette position angulaire extrême correspond au cas où la roue arrière 14 passe sur un obstacle et remonte par rapport à la surface du sol S, ce qui sollicite le système de suspension 12 vers le haut en comprimant l'amortisseur 16.

Dans cette position angulaire extrême, une partie du corps de l'amortisseur 16 s'étend à travers l'échancrure 46, c'est-à-dire qu'une partie du corps de l'amortisseur 16 traverse le plan général de la paroi principale 38 du capot de protection 36. Il s'agit de la partie du corps de l'amortisseur 16 la plus proche de l'oeillet de fixation 24.

Selon un autre cas d'utilisation, lorsque la roue arrière 14 descend dans un creux tel qu'une ornière ou une rigole, le capot de protection 36 protège également l'articulation arrière 22 d'un choc contre la surface du sol S, ou contre les bords du creux.

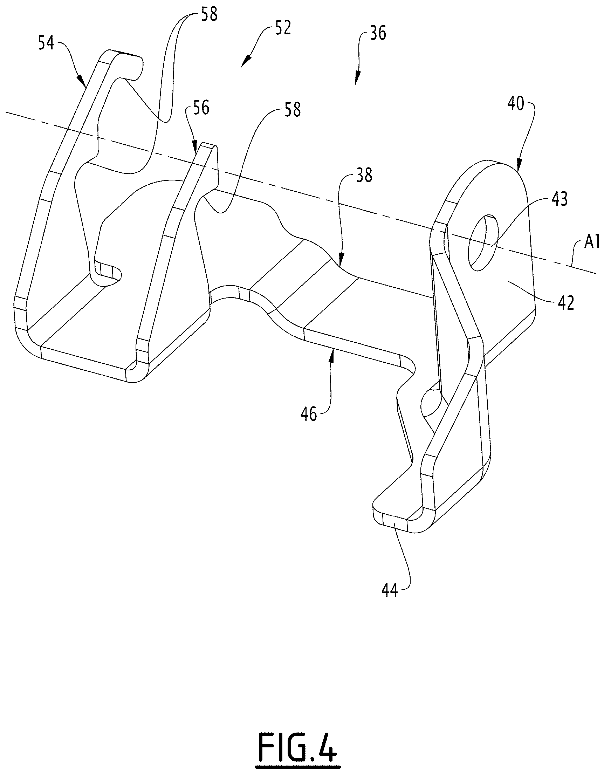

Sur la figure 4, on a représenté une variante de réalisation du capot de protection 36 qui vise à permettre un pré-maintien du capot de protection 36 sur le bras de suspension arrière 18, avant le montage de la tige de fixation 28.

Selon cette variante de réalisation, la paroi principale 38 comporte, du côté opposé à la bride de fixation 40, un organe d'accrochage 52 apte à retenir le capot de protection 36 sur le bras de suspension arrière 18 avant sa fixation au moyen de la tige de fixation 28.

Selon le mode de réalisation représenté, l'organe d'accrochage 52 comporte un premier flanc radial 54 et un second flanc radial 56, chaque flanc radial 54, 56 s'étendant vers le haut, depuis la paroi principale 38 du capot de protection 36, et comportant au moins un crochet 58.

Dans l'exemple représenté, chaque flanc radial 54, 56 est obtenu par pliage de tôle depuis un bord de la paroi principale 38.

Le premier flanc radial 54, ici à gauche, comporte deux crochets 58 qui viennent s'adapter de manière complémentaire à la forme d'une partie du bras de suspension arrière 18 en vis-à-vis.

Le second flanc radial 56, ici à droite, comporte un seul crochet 58 qui vient aussi s'adapter de manière complémentaire à la forme d'une partie du bras de suspension arrière 18 en vis-à-vis.

L'organe d'accrochage 52 et les crochets 58 sont conformés et configurés pour permettre au capot de protection 36 de pouvoir tenir sur le bras de suspension arrière 18, en l'absence de la tige de fixation 28. Ceci permet à un opérateur, lors de l'assemblage des différents composants du système de suspension 12, de pré-positionner dans un premier temps le capot de protection 36 sur le bras de suspension arrière 18, puis de positionner indépendamment le palier lisse 26 et l'oeillet de fixation de l'amortisseur 16, sans avoir à tenir simultanément le capot de protection 36. Une fois ces éléments positionnés, il ne reste plus qu'à insérer la tige de fixation 28 et à la visser.

Toute caractéristique décrite ci-dessus pour un mode de réalisation ou une variante est applicable aux autres modes de réalisation et variantes, pour autant que cela est techniquement possible.

## Revendications

1. Système de suspension (12) pour véhicule (10) comportant un bras de suspension arrière (18) et un amortisseur (16) qui est lié au bras de suspension arrière (18) par une articulation arrière (22) de manière que l'amortisseur (16) puisse pivoter autour d'un axe d'articulation (A1) selon un débattement angulaire déterminé entre deux positions angulaires extrêmes, l'articulation arrière (22) comportant une tige de fixation (28) sur laquelle l'amortisseur (16) est monté, **caractérisé en ce qu'**il comporte un capot de protection (36) qui est rapporté sur la tige de fixation (28) de manière à protéger l'articulation arrière (22) en cas de choc arrière, et **en ce que** le capot de protection (36) comporte une paroi principale (38) qui s'étend globalement dans un plan parallèle à l'axe d'articulation (A1), la paroi principale (38) étant pourvue d'une échancrure (46) apte à recevoir une portion de l'amortisseur (16) dans au moins une de ses positions angulaires extrêmes.

2. Système de suspension (12) selon la revendication précédente, **caractérisé en ce que** le capot de protection (36) comporte une bride de fixation (40) qui est formée d'un élément de paroi radiale (42) et qui comporte un trou de montage (43) traversé par la tige de fixation (28).

3. Système de suspension (12) selon la revendication précédente, **caractérisé en ce que** l'élément de paroi radiale (42) se prolonge vers l'arrière jusqu'à une extrémité arrière (44) de la paroi principale (38).

4. Système de suspension (12) selon la revendication 2 ou 3, **caractérisé en ce que** la paroi principale (38) comporte, à son extrémité arrière (44), du côté opposé à la bride de fixation (40), au moins une languette de protection (48, 50) qui s'étend sensiblement perpendiculairement, par rapport au plan général de la paroi principale (38).

5. Système de suspension (12) selon la revendication précédente, **caractérisé en ce que** la paroi principale (38) comporte deux languettes de protection (48, 50) dont l'une s'étend dans un plan sensiblement orthogonal à l'élément de paroi radiale (42), et l'autre s'étend dans un plan sensiblement parallèle à l'élément de paroi radiale (42).

6. Système de suspension (12) selon l'une quelconque des revendications 2 à 5, **caractérisé en ce que** la paroi principale (38) comporte, du côté opposé à la bride de fixation (40), un organe d'accrochage (52) apte à retenir le capot de protection (36) sur le bras de suspension arrière (18), avant la fixation de la tige de fixation (28) sur le bras de suspension arrière (18).

7. Système de suspension (12) selon la revendication précédente, **caractérisé en ce que** l'organe d'accrochage (52) comporte deux flancs radiaux (54, 56), chaque flanc (54, 56) comportant au moins un crochet (58).

8. Système de suspension (12) selon l'une quelconque des revendications précédentes, **caractérisé en ce que** le capot de protection (36) est réalisé d'une seule pièce, de préférence en tôle emboutie ou par moulage en matière plastique.

9. Véhicule (10) comportant un système de suspension (12) selon l'une quelconque des revendications précédentes.
